# EUROPÄISCHE PATENTSCHRIFT

(11) **EP 2 550 180 B1**
(45) Veröffentlichungstag und Bekanntmachung des Hinweises auf die Patenterteilung: **06.06.2018**
(21) Anmeldenummer: 11710704.5
(22) Anmeldetag: 19.03.2011
(51) Int. Cl.: B60Q 3/80, H05B 33/08

(54) **EINRICHTUNG ZUM EINSTELLEN EINES FARBORTES**
DEVICE FOR SETTING A COLOUR LOCUS
DISPOSITIF DE RÉGLAGE D'UN LIEU CHROMATIQUE

(30) Priorität: 25.03.2010 DE 102010003275
(43) Veröffentlichungstag der Anmeldung: 30.01.2013
(73) Patentinhaber: Bayerische Motoren Werke Aktiengesellschaft, 80809 München (DE)
(72) Erfinder: WILLMANN, Tom, 81379 München (DE); ENDERS, Martin, 82041 Deisenhofen (DE); LOEBIG, Peter, 80997 München (DE)
(86) Internationale Anmeldenummer: PCT/EP2011/001377
(87) Internationale Veröffentlichungsnummer: WO 2011/116915

(56) Entgegenhaltungen:
- EP-A2- 1 053 910
- WO-A1-2006/130199
- WO-A2-2008/001289
- DE-A1-102006 055 615
- DE-T2- 69 300 468
- US-A1- 2005 040 774
- US-A1- 2008 238 838
- US-A1- 2009 229 955

## Beschreibung

Die Erfindung betrifft eine Einrichtung zum Einstellen eines Farbortes. Neuere Kraftfahrzeuge verfügen im Innenraum zunehmend über sogenannte ambiente Lichtfunktionen, die für eine dezente Ausleuchtung des Innenraumes sorgen. Der Einsatz dieser Art der Beleuchtung erleichtert den Passagieren im Fahrzeug die Orientierung und schafft eine individuelle und wohnliche Atmosphäre. Dabei soll es einem Nutzer ermöglicht werden, die Farbe einer solchen ambienten Beleuchtung einzustellen. Eine solche Beleuchtung ist aus DE 10 2006 055615 A1 bekannt. Der Erfindung liegt daher die Aufgabe zu Grunde, eine einfache Lehre zum Einstellen eines Farbortes anzugeben.

Diese Aufgabe wird gelöst durch die Merkmale des unabhängigen Patentanspruchs. Vorteilhafte Weiterbildungen der Erfindung ergeben sich aus den abhängigen Ansprüchen.

Eine erfindungsgemäße Einrichtung zum Einstellen eines Farbortes umfasst eine Speichereinrichtung zur Speicherung einer Raumkurve in einem Farbraum und ein Betätigungselement. Eine Recheneinheit ist derart eingerichtet und mit der Speichereinrichtung und dem Betätigungselement gekoppelt, dass durch die Recheneinheit in Antwort auf eine Betätigung des Betätigungselementes ein auf der Raumkurve liegender Farbort eingestellt wird, der bestimmt ist durch einen Anfangsfarbort und eine Entfernung zwischen dem Anfangsfarbort und dem Farbort.

Dadurch ist es möglich mit nur einem einfachen Betätigungselement, wie beispielsweise einem Taster, aus einer Vielzahl von Farborten eines Farbraumes einen bestimmten Wunsch-Farbort auszuwählen und einzustellen. Insbesondere wird es einem Nutzer ermöglicht, aus einer Vielzahl von Farborten einen Wunschort auszusuchen, wobei aber die Vielzahl der Farborte durch den Hersteller der Einrichtung vorgegeben oder eingeschränkt sein kann.

Ein Farbraum ist dabei beispielsweise der Köper der darstellbaren Farben eines Farbmodells. Ein Farbort ist beispielsweise ein Punkt im Farbraum und wird im Farbraum mit geeigneten Koordinaten in seiner Lage beschrieben. Erfindungsgemäß, ist der Anfangsfarbort der zuletzt eingestellte Farbort ist. Dadurch wird erreicht, dass eine Farbänderung immer ausgehend von dem zuletzt durch den Nutzer ausgewählten Farbort erfolgt. Dadurch wird eine für den Nutzer erwartbare Farbeinstellung bewirkt.

Es ist eine andere Weiterbildung der Erfindung, dass die Entfernung(Distanz oder Strecke) zwischen dem Anfangsfarbort und dem einzustellenden Farbort zumindest zunächst, insbesondere proportional, mit der Betätigungszeit, mit der Betätigungsanzahl oder mit dem Betätigungsgrad des Betätigungselementes zunimmt. Dies ermöglicht eine einfache und für den Nutzer erwartbare Einstellung des Farbortes.

Eine besondere Weiterbildung der Erfindung sieht vor, dass die Entfernung als Entfernung entlang der Raumkurve bestimmt ist. Dadurch wird erreicht, dass der einzustellende Farbort ausgelöst durch die Betätigung des Betätigungselementes entlang der Raumkurve "wandert".

Die Raumkurve ist dabei erfindungsgemäß geschlossen, um einem Nutzer beispielsweise mit der einmaligen Betätigung eines Tasters nach einer gewissen Zeit auch wieder die Einstellung des Anfangsfarbortes zu ermöglichen.

Um die Auswahl eines Farbortes möglichst flexibel zu gestalten, ist vorgesehen, dass die Raumkurve zumindest vier Ecken umfasst.

Im Folgenden wird die Erfindung anhand von Beispielen unter Bezugnahme auf die folgende Figur näher erläutert:

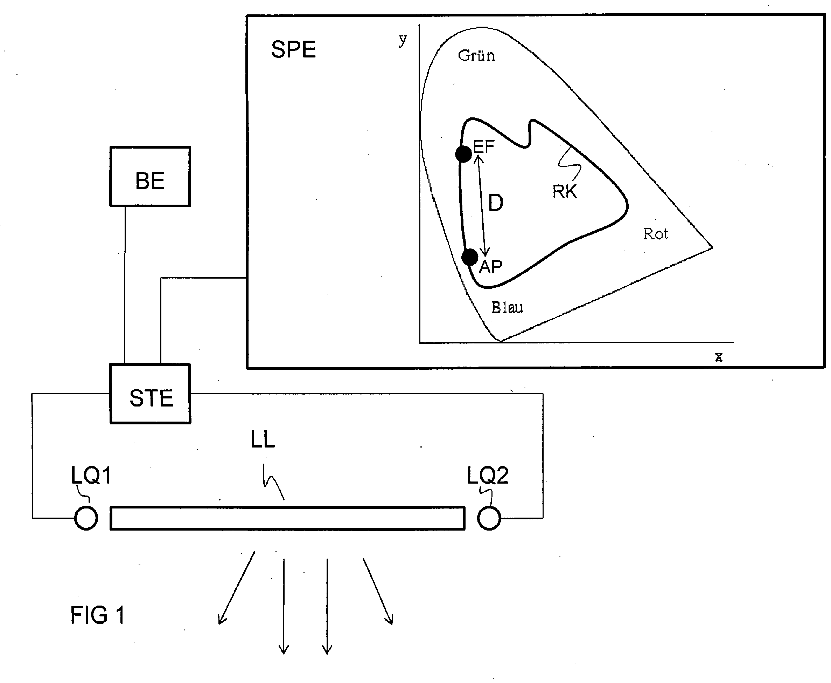

- Figur 1: zeigt eine vereinfachte schematische Prinzipdarstellung einer Kraftfahrzeuginnenbeleuchtung.

Figur 1 zeigt zeigt einen stabförmigen Lichtleiter LL, in den am ersten Ende Licht einer ersten RGB-Leuchtdiode LQ1 eingekoppelt wird, und am gegenüberliegenden, zweiten Ende Licht einer zweiten RGB-Leuchtdiode LQ2 eingekoppelt wird. Durch geeignete Auskoppelelemente, beispielsweise auf der Rückseite des Lichtleiters LL wird bewirkt, dass das Licht durch den Lichtleiter LL an der Vorderseite des Lichtleiters LL abgestrahlt wird.

Die Helligkeit und/oder die Farbigkeit des von den RGB-Leuchtdioden LQ1,LQ2 in den Lichtleiter LL eingekoppelten Lichts kann über eine Recheneinheit STE, beispielsweise über die Bestromung der RGB-Leuchtdioden LQ1,LQ2 oder basierend auf einer Pulsweitenmodulation, eingestellt werden. Dazu kann die Recheneinheit STE beispielsweise mit entsprechend eingerichteten Konstantstromquellen gekoppelt sein oder über entsprechende PWM-Ausgänge verfügen.

Die einzustellenden Bestromungswerte oder Pulsweitenmodulationsparameter für die Leuchtdioden LQ1,LQ2 basieren auf dem durch einen Nutzer über ein Betätigungselement BE ausgewählten oder eingestellten Farbort. Den verschiedenen auswählbaren Farborten sind dazu in der Recheneinheit STE entsprechende Bestromungswerte oder Pulsweitenmodulationsparameter zugeordnet.

Die auswählbaren Farborte befinden sich auf einer vorgegebenen Raumkurve eines vorgegebenen Farbraumes. Informationen, welche die auswählbaren Farborte oder die Raumkurve selbst, beschreiben, sind in einer Speichereinrichtung SPE, die mit der Recheneinheit STE gekoppelt ist, abgelegt.

Im vorliegenden Beispiel ist als vereinfachter Farbraum die zweidimensionale CIE-Normfarbtafel dargestellt. Durch eine vorgegebene, beispielsweise durch einen Hersteller definierte, Raumkurve RK ist die Vielzahl der durch einen Nutzer auswählbaren Farborte innerhalb des durch die Normfarbtafel bestimmten Farbraumes bestimmt.

Ausgehend von einem Anfangsfarbort AP wird ein einzustellender Farbort EF dadurch bestimmt, dass ein Nutzer zunächst das Betätigungselement BE betätigt, indem er beispielsweise einen Taster drückt. Je länger die Betätigungsdauer des Tasters, desto größer wird zumindest zunächst oder anfangs die Distanz D zwischen Anfangsfarbort AP und einzustellendem Farbort EF. Diesen Zusammenhang kann man sich anschaulich als ein durch die Betätigung des Tasters ausgelöstes "Wandern" des einzustellenden Farbortes EF ausgehend von dem Anfangsfarbort AP entlang der Raumkurve RK vorstellen. Die Betätigungszeit kann dabei die Zeit eines dauerhaften Drückens des Tasters oder die Zeit zwischen einem ersten und einem zweiten Drücken des Tasters sein. Die Distanz D ist insbesondere die Strecke zwischen Anfangsfarbort AP und einzustellendem Farbort EF entlang der Raumkurve RK. Der nach der Betätigung des Betätigungselementes eingestellte Farbort EF wird dann zur Einstellung der Farbe der Lichtquellen LQ1,LQ2 verwendet.

Wird als Betätigungselement eine Schaltwippe, ein Kippschalter, ein Drehschalter oder ein Toggelschalter verwendet, so kann ein "Wandern" entlang der Raumkurve in zwei Richtungen bewirkt werden, gegebenenfalls sogar mit verschiedenen "Geschwindigkeiten".

Je nach Ausführungsvariante kann darüber hinaus durch ein oder mehrere definierte Kurzbetätigungen oder Langbetätigungen ein Springen zu vorgegebenen Standardfarben bewirkt werden.

Es kann zudem vorgesehen sein, dass mit dem Betätigungselement BE zudem ein Helligkeitswert eingestellt wird.

## Patentansprüche

1. Einrichtung zum Einstellen eines Farbortes
- mit einer Speichereinrichtung (SPE) zur Speicherung einer Raumkurve (RK) in einem Farbraum,
- mit einem Betätigungselement (BE) und
- mit einer Recheneinheit (STE), die derart eingerichtet und mit der Speichereinrichtung (SPE) und dem Betätigungselement (BE) gekoppelt ist, dass durch die Recheneinheit (STE) in Antwort auf eine Betätigung des Betätigungselementes ein auf der Raumkurve (RK) liegender Farbort eingestellt wird, der bestimmt ist durch einen Anfangsfarbort (AP) und eine Entfernung (D) zwischen dem Anfangsfarbort (AP) und dem Farbort, **dadurch gekennzeichnet, dass**
die Raumkurve eine geschlossene Raumkurve ist,
der Anfangsfarbort der zuletzt eingestellte Farbort ist.

2. Einrichtung nach Anspruch 1,
bei dem die Entfernung (D) zwischen dem Anfangsfarbort (AP) und dem Farbort, insbesondere proportional, mit der Betätigungszeit, mit der Betätigungsanzahl oder mit dem Betätigungsgrad des Betätigungselementes (BE) zunimmt.

3. Einrichtung nach einem der vorhergehenden Ansprüche,
bei dem die Entfernung (D) als Entfernung entlang der Raumkurve (RK) bestimmt ist.

4. Einrichtung nach einem der vorhergehenden Ansprüche,
bei dem die Raumkurve (RK) zumindest vier Ecken umfasst.

## Claims

1. A means for setting a colour location
- with a memory device (SPE) for storing a space curve (RK) in a colour space,
- with an actuating element (BE) and
- with an arithmetic unit (STE),
which is set up and is coupled with the memory device (SPE) and the actuating element (BE) in such a way that a colour location lying on the space curve (RK) is set by the arithmetic unit (STE) in response to actuation of the actuating element, which location is determined by an initial colour location (AP) and a distance (D) between the initial colour location (AP) and the colour location, **characterised in that**
the space curve is a closed space curve,
the initial colour location is the last-set colour location.

2. A means according to Claim 1,
in which the distance (D) between the initial colour location (AP) and the colour location increases, especially particular proportionally, with the actuating force, the actuation number or the degree of actuation of the actuating element (BE).

3. A means according to one of the preceding claims,
in which the distance (D) is determined as a distance along the space curve (RK).

4. A means according to one of the preceding claims, in which the space curve (RK) comprises at least four corners.

## Revendications

1. Dispositif de réglage d'un lieu de couleur comprenant :
- un dispositif de mémoire (SPE) permettant d'enregistrer une courbe spatiale (RK) dans un espace de couleur,
- un élément d'actionnement (BE), et
- une unité de calcul (STE) qui est réalisée et couplée au dispositif de mémoire (SPE) et à l'élément d'actionnement (BE) de sorte que, l'unité de calcul (STE), puisse en réponse à un actionnement de l'élément d'actionnement régler un lieu de couleur situé sur la courbe spatiale (RK) qui est défini par un lieu de couleur initial (AP) et la distance (D) entre le lieu de couleur de départ (AP) et le lieu de couleur,
**caractérisé en ce que**
la courbe spatiale est une courbe fermée et le lieu de couleur de départ est le lieu de couleur réglé en dernier lieu.

2. Dispositif conforme à la revendication 1,
dans lequel la distance (D) entre le lieu de couleur de départ (AP) et le lieu de couleur augmente, en particulier de façon proportionnelle avec la durée d'actionnement, avec le nombre d'actionnements ou avec le degré d'actionnement de l'élément d'actionnement (BE).

3. Dispositif conforme à l'une des revendications précédentes,
dans lequel la distance (D) est déterminée sous la forme d'une distance le long de la courbe spatiale (RK).

4. Dispositif conforme à l'une des revendications précédentes,
dans lequel la courbe spatiale (RK) a au moins quatre coins.
